# EUROPEAN PATENT APPLICATION

(11) **EP 2 995 931 A1**
(43) Date of publication of application: **16.03.2016**
(21) Application number: 13883958.4
(22) Date of filing: 06.05.2013
(51) Int. Cl.: G01N 21/01, G01N 21/25, D06B 23/00, D06B 23/30

(54) **DYE LIQUOR COLOR DETECTION APPARATUS FOR DYEING MACHINE**

(71) Applicant: Fong's National Engineering (Shenzhen) Co., Ltd., Shenzhen, Guangdong 518114 (CN)
(72) Inventor: TSUI, Tak Ming William, Hong Kong (CN)
(74) Representative: Stuttard, Garry Philip
(86) International application number: PCT/CN2013/075224
(87) International publication number: WO 2014/179929

(57) **Abstract**

The present invention relates to a color detection device for fabric dyeing machines, comprising a measurement chamber (2), ray emitting device (7), ray receiving device (8) with a chamber inlet (3) and chamber (4) outlet. The both ends of said measurement chamber have lenses (5A & 5B), in which the light ray emitted from said ray emitting device pierces through the lens (5A), the liquor in measurement chamber and lens (5B). The ray is received by ray receiving device (8). A filter (16) is placed in front of chamber inlet (3), a controller (15) connects to the ray emitting device (8), chamber inlet valve (27), chamber outlet valve (29) and cleansing valve (28). The invention could precisely detect dye liquor color in special working environment of dyeing industry.

## Description

### Field of invention

This invention relates to a solution color detection device, particularly a device for fabric dyeing machines.

### Background technology

Typical fabric dyeing process includes processes such as temperature conditioning, pressurizing, dye injection and draining. The color condition of dye liquor directly affects the dyeing quality, hence it is critical to monitor dye liquor in real time during dyeing process. To alter the condition of dye liquor in time could save dyeing time and resources. Cleansing agent or water is injected to dilute dye liquor while cleaning the fabric, and monitoring the residue in the liquor is essential during the rinsing process. Since the saltiness is directly related to dye concentration, and its detection technique is rather simple, so it exists in dyeing industry to determine how clean the fabric is by measuring the saltiness in dye liquor. However it requires experience from workers and previous data for judgment which are not subjective and accurate. The dyeing industry is desperate for a new dye liquor detection device that suits the modern fabric dyeing industry.

### Brief introduction

To overcome the shortages of dye liquor detection techniques, the present invention introduces a new device that is suitable for industrial dyeing environment for accurate measurement.

The present invention provides a dye liquor detection device for dyeing machines, comprising a measurement chamber 2, a ray emitting device 7, a ray receiving device 8, an entrance 3 and an exit 4 for the measurement chamber with lens 5A and 5B. The ray emitting device emits ray through the lens 5A and the dye liquor, and received by the ray receiving device through lens 5B.

The present invention which provides a dye liquor detection device for dyeing machines is characterized in that the exit 4 of the measurement chamber is higher than the entrance 3.

The present invention which provides a dye liquor detection device for dyeing machines is characterized in that the chamber inlet 3 and chamber outlet 4 have respectively an inlet valve 27 and outlet valve 29.

The present invention which provides a dye liquor detection device for dyeing machines is characterized in that the lens 5 could withstand high temperature, high pressure and allow light rays passing through.

The present invention which provides a dye liquor detection device for dyeing machines is characterized in that the measurement chamber 2 has a cleansing pipe 6. One end of said cleansing pipe pierces through the shell on top of the measurement chamber and connects to the source of cleansing agent, while the other end split into two branches pointing lens 5A and 5B.

The present invention which provides a dye liquor detection device for dyeing machines is characterized in that the cleansing pipe is connected to a cleansing valve 28.

The present invention which provides a dye liquor detection device for dyeing machines is characterized in that the lens 5A and 5B are separately mounted between two pairs of inner flange and outer flange. The flanges are connected with gaskets placing between the flanges and lens. There are also silicon rings installed between the flanges and ray emitting device, as well as ray receiving device.

The present invention which provides a dye liquor detection device for dyeing machines is characterized in that said invention further consists of a filter 16 placed before the entrance, said filter comprises a shell body 17, filter element 18, granules 19, filter inlet 20, filter outlet 21, backwash inlet 22 and backwash outlet 23.

The present invention which provides a dye liquor detection device for dyeing machines is characterized in that the invention further consists of a controller 15, said controller connects to the ray receiving device, inlet valve, outlet valve and cleansing valve.

The present invention provides a dye liquor detection device for dyeing machines which is applicable for special working environment of high temperature and pressure in the dyeing industry, to accurately measure the color of dye liquor and greatly enhance the efficiency of dyeing and rinsing, hence saving a good amount of energy and primary resources.

### Description of figures

Figure 1 is the cross section view of the present invention.
Figure 2 is the appearance of the present invention.
Figure 3 shows the flow direction of cleansing fluid.
Figure 4 shows the configuration of a dyeing machine using the present invention.
Figure 5 shows the filter structure.
Figure 6 shows the flow direction inside the filter.
Figure 7 shows the flow direction of backwash inside the filter.
Figure 8 shows the methodology of filtering using granules.
Figure 9 shows how the impurities pass through the filter element during backwash.
Figure 10 shows the connection between the controller and valves.
Whereas,
1. Color detection device
2. Measurement chamber
3. Chamber inlet
4. Chamber outlet
5. Lens (including 5A and 5B)
6. Cleansing pipe
7. Ray emitting device
8. Ray receiving device
9. Inner flange
10. Outer flange
11. Gasket
12. Silicon ring
13. Dyeing vessel
14. Dye circulation
15. Controller
16. Filter
17. Shell body
18. Filter element
19. Granules
20. Filter inlet
21. Filter outlet
22. Backwash inlet
23. Backwash outlet
24. Filter inlet valve
25. Backwash inlet valve
26. Backwash outlet valve
27. Chamber inlet valve
28. Cleansing valve
29. Chamber outlet valve
30. Fill valve
31. Drain valve

### Description of embodiment

The present invention is further explained via the following embodiment and figures.

The present invention applies the color detection technology on dyeing machines, to combine with its control system and utilize the data for dye liquor conditioning, such as fill, drain, or other assigned commands.

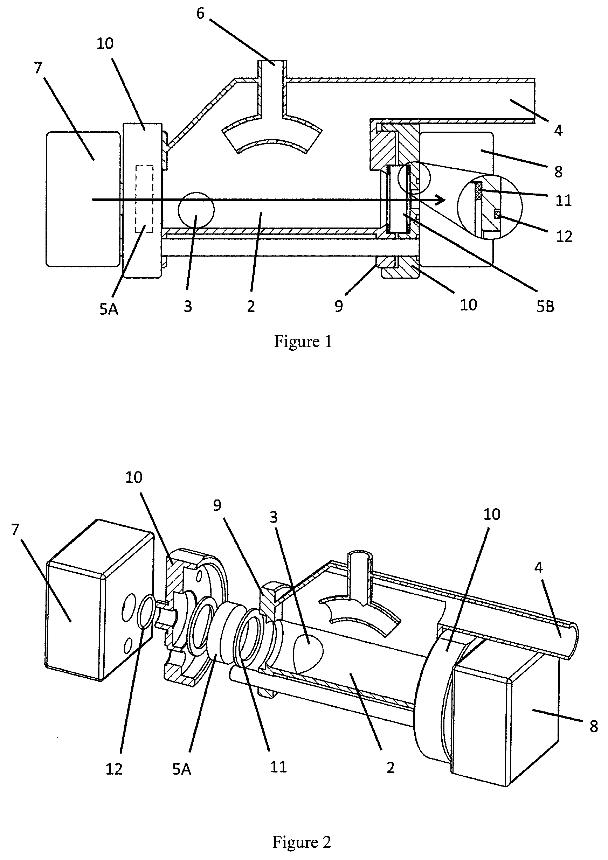

Figure 1 is the cross section view of an embodiment of the present invention. As figure 1 shows this embodiment is a color detection device for dyeing machines. The measurement chamber inlet 3 is on a side of measurement chamber 2, and the chamber outlet 4 is at the top of chamber. There are inner flanges 9 on both sides of chamber, and outer flanges 10 matching its shape connected by bolts. There are lens 5A and 5B placed between the inner flange and outer flange, sealed by gaskets 11. There are silicon rings 12 between the outer flanges and ray emission device 7 as well as ray receiving device 8. There is a cleansing pipe 6 on top of the measurement chamber 2.

Both the chamber inlet and outlet connect to the dye circulation, such that it forms a secondary circulation. The chamber inlet and outlet lie respectively on the chamber's side and top, when dye liquor enters the chamber a light ray is emitted from the ray emitting device and sensed by the ray receiving device at the other end of measurement chamber through both lenses.

The inner flanges and outer flanges are in donut shape, to allow light ray piercing through the middle into the measurement chamber, as shown by the arrow in figure one.

The chamber inlet 3 connects to the dye circulation, where dye liquor enters the chamber via the inlet as a sample for measurement. The dye liquor is then discharged from chamber outlet 4. The outlet is higher than the inlet in altitude to prevent formation of bubbles.

As shown as the arrow in figure 1, when the measurement chamber is filled with dye liquor, the ray released from the ray emitting device 7 will pass through in order the hole of outer flange, the first lens, the hole of inner flange, the dye sample inside the chamber, the hole of inner flange on the other side, the second lens and the hole of outer flange on the other side to the ray receiving device eventually.

As the dye liquor is a mixture of different chemical compounds, in addition to collision inside the pipes during travelling, foam is formed in the dyeing process. Hence a chamber inlet valve 27 and outlet valve 29 are installed at both ends of chamber, such that they could shut down and isolate the dye liquor inside the chamber from the system. The liquor inside would be calmed in certain period of time allowing the foam to burst such that the ray emitting device could attain accurate information from the liquor. Then the outlet valve reopens to discharge the liquor while at the inlet valve reopens too for another batch of sample. The valves periodically open and close during the detection process, to collect discrete sample data in real time.

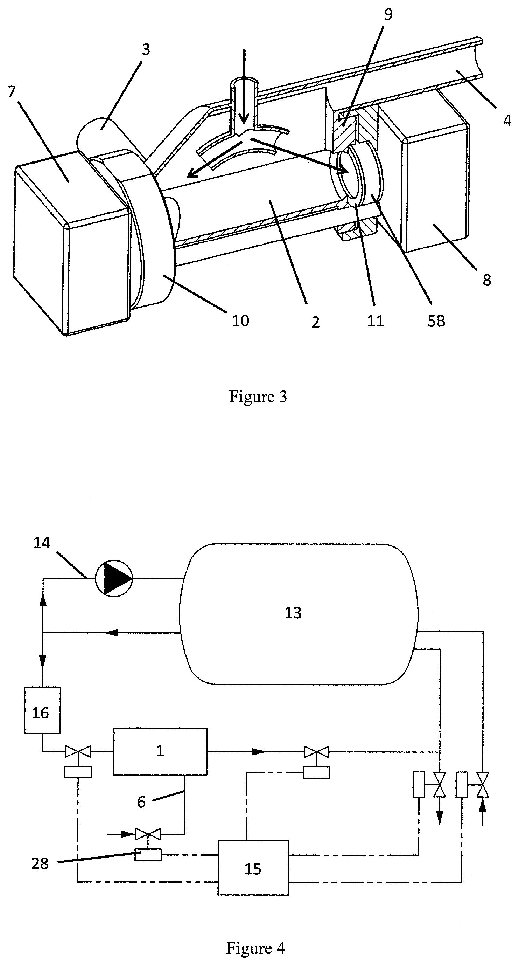

Figure 2 is the appearance of present invention, and figure 3 shows the flow direction of cleansing agent. There are gaskets 11 and silicone rings 12 to prevent leakage. When dye detection is complete, the lenses often contain dye residue affecting the ray refraction and leads to error, especially dyeing in different colors. To maintain its precision the present invention consists of an automatic cleansing device - an inverted, Y-shape pipe pierces through the top of measurement chamber where it splits in two ends pointing towards the lenses, as figure 2 shows. The cleansing pipe connects to the source of cleansing agent at the other end. The cleansing agent is often chemicals for cleaning purposes or simply water. The cleansing agent would be spread and ejected onto the lenses on both sides and wash away the residue, as the arrow shown in figure 3. Yet the cleansing agent would not be guided into the measurement chamber during the color detection. To control the flow and timing of cleansing, the cleansing pipe connecting to the source of cleansing agent in this invention has a cleansing valve 2 connected to and controlled by controller 15.

Said controller 15 can recognize the condition of a dyeing machine by receiving signals from all kinds of sensors to correspondingly adjust machine settings. Executed by the controller said cleansing valve could be opened after the dye liquor detection is complete.

Figure 4 shows the configuration of a dyeing machine using the present invention. The embodiment is used on a dyeing machine for dye color detection, sending signals to the machine control system. The configuration consists of a dyeing vessel 13, a dye circulation 14, the color detection device 1 and a controller 15. Fabrics are put inside the dyeing vessel 13 for processing by interacting with dye liquor.

Within the color detection system, samples are directly drawn from the dye circulation. However there is lint produced during dyeing and travels with dye liquor in the system. Dye liquor containing lint is unfavorable for color detection as the existence of lint may affect the efficiency receiving light rays. Typically a dyeing system circulates liquor continuously to prevent sediment forming, and uses a filter to remove impurities from the circulation. The dye color detection spot could be installed on the pipe leaving the vessel, before the liquor being altered in dosage or temperature to measure the real condition inside a kier. However the flow inside a dyeing system is huge with existence of foam, which is unfavorable for color detection. As explained previously, it is easier to perform detection under a calm condition. The embodiment draws a small stream from the major circulation and allows lingering at some point without disrupting normal operation. In the configuration of piping, since said device is installed under the dyeing vessel, only one pump is sufficient to propel the drive for both circulations, such that dye liquor falls into the device. Hence a configuration consisting of the present invention can be applied by using said device on a secondary circulation.

The embodiment also uses a filter for said detection device. The filter is specially designed for small piping. The filter has two outlets, to discharge filtered liquor and retentate separately. Its filtering way is to use granules blocking the dye liquor outlet partially such that impurities are trapped above said granules and the dye liquor can flow through the granules towards the outlet, achieving a filtering effect.

In this embodiment, the filter 16 is installed before the color detection device 1 as shown in figure 4. In some circumstances the detection device is considered a monitor of drainage equipment, whilst the detection device is separated from the main circulation of dye liquor and the liquor flowing through the device is discharged directly without prior filtering. The unfiltered liquor entering the measurement chamber would affect the sensitivity of detection device, because impurities such as lint would obstruct the ray inside said chamber. Hence it is necessary to install an independent filter on a parallel circulation with said color detection device in a relatively small flow.

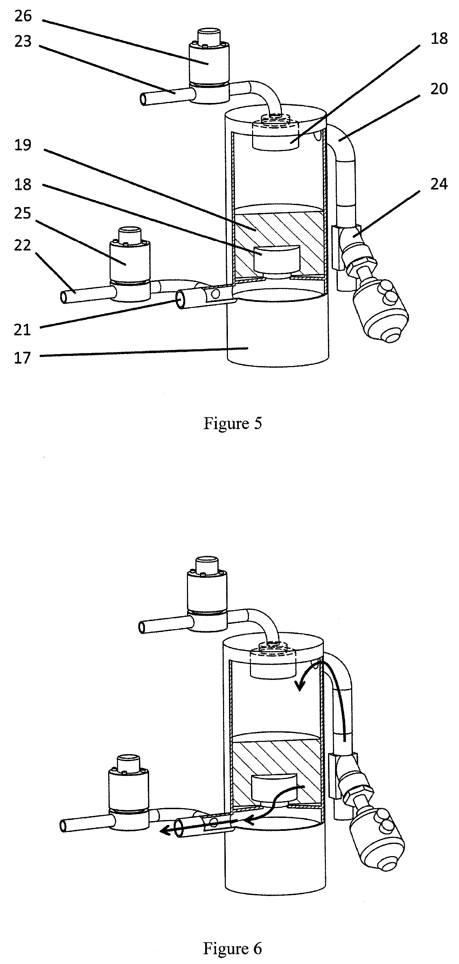

Figure 5 shows the partial cross section view of the filter 16. Said filter includes a shell body 17, a filter element 18, granules 19, filter inlet 20, filter outlet 21, backwash inlet 22 and backwash outlet 23. The filter inlet is placed on the side wall of shell body, where dye liquor enters the filter via said inlet. The shell body is a sealed cylinder containing dye liquor and granules. There are one outlet at both the top and bottom of said shell body covered by filter element. There is a certain amount of granules contained and precipitated inside the shell body. The filter element can withhold the granules allowing it to stay inside the filter. The granules rested on the bottom filter element cover the filter outlet such that the debris in dye liquor could be retained at the top of granule layer while dye liquor permeates through said layer and filter element to leave the shell body from the filter outlet, as shown in the arrow in figure 6.

After a period of filtering the shell body would contain an increasing amount of impurities. Said filter uses a design of backwash to remove the impurities from the shell body, in other words the filter in this invention also includes a self-cleaning function. The backwash function is implemented by injecting cleansing agent from the outlet into the shell body, stirring up the granule and residue to discharge it at the other end. The backwash outlet is also covered by a filter element to trap the granules such that it can rest inside the filter again after backwash.

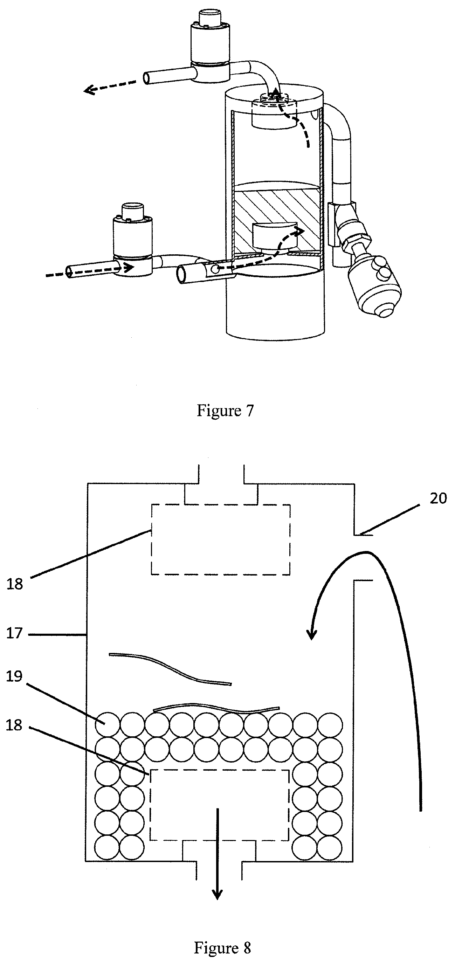

To implement the self-cleaning function, a branch is connected to the filter outlet as a backwash inlet. The backwash fluid could be any cleansing fluid such as water, pumping in a reversed direction via the filter element at the bottom. The backwash fluid arouses the granules and precipitates meanwhile the filter inlet is closed preventing backflow. Only the backwash outlet 23 at the top is opened so the backwash fluid could carry the impurities away from the filter as shown by the arrow in figure 7. As aforesaid, the outlet at the top of shell body is also covered by a filter element to prevent loss of granules, when impurities are gradually being removed. The filter element is the same on both sides of shell body. Said filter element allow impurities like lint to pass through, but trapping other debris in smaller sizes. The shape of perforation on filter element is the key. As most impurities in dye liquor are lint in worm shape, it has a rather small cross section area despite its huge size so it could possibly pass through the perforations. The granules used in this embodiment have a relatively larger size in diameter so it could not pass through the perforations. In normal circumstances the granules have formed a thick layer at the bottom of filter so lint is rather hard to leave, eliminating the possibility of being discharged via filter outlet 21. Hence the lint can only be taken away from the top of shell body. Figure 8 further demonstrates the embodiment and application of the above feature described. Dye liquor follows the path of arrow as shown in the figure entering the shell body 17 via filter inlet 20, where the filter element is illustrated in dotted lines and the gap between the lines represents the perforation. The granules 19 are enlarged for better illustration, bigger than the gaps in diameter precipitating around the filter element. Hence the lengthy lint in dye liquor is separated from the filter element.

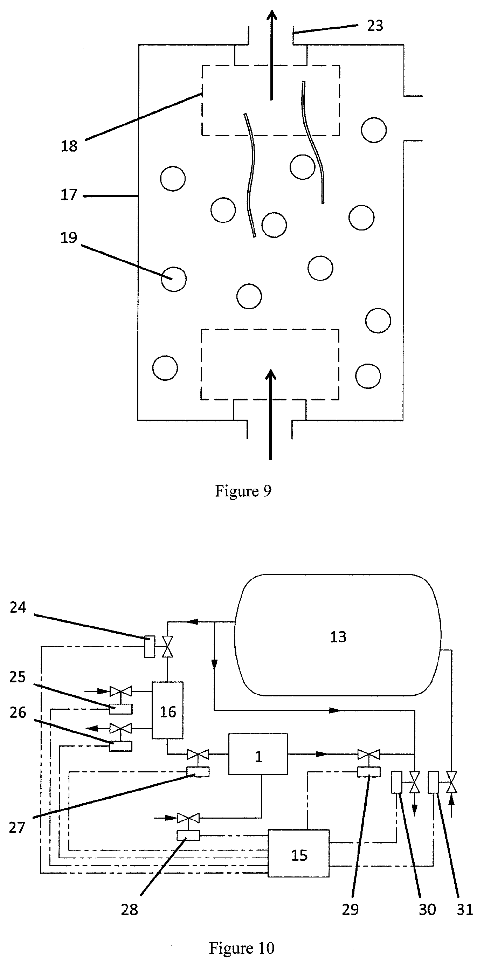

Figure 9 shows the activity inside the shell body during backwash. In this situation the filter inlet 20 is closed, the backwash fluid comes in evoking the granules and lint all together. The backwash outlet is opened to allow backwash fluid leaving the shell body as shown by the arrow in the figure. Since the granules are affected by the turbulence it cannot precipitate around the top filter element so the lint is allowed to pass through the perforations.

The filtering step and backwash should be separated by connecting valves on each inlet and outlet to control the flow coming in or out the filter. As aforesaid, the filter is only used for dye liquor heading towards the detector, where the flow is relatively minimal to the dye circulation, so among the valve choices it is recommended for those designed for small flow rate such as electromagnetic valves, for example the backwash inlet valve and backwash outlet valve in the embodiment.

In this embodiment every single inlet or outlet is connected to a valve for flow control, yet these valves are different. The operation signal is sent from the controller 15 to all valves according to various procedures.

Figure 10 shows the configuration of an embodiment and its filter valves connected to a control system. The signal transmission path is represented in dotted line while the solid lines represent pipes. The basic moves of valves under different situations are further explained below.

As aforesaid the operation is separated into filtering and backwash. Under filtering the filter inlet 24 and chamber inlet 27 are opened, part of the dye liquor leaving the dyeing vessel 13 flows into the color detection device 1, whilst the backwash inlet 25 and backwash outlet 26 are closed.

During backwash, the filter inlet and chamber inlet are closed to stop dye liquor further flowing into the filter. The backwash inlet valve and backwash outlet valve opens to provide a liquor path flowing through the filter and flush away the residue inside.

It is clearly seen that the valve motions are inverted between two applications. By executing the above actions via a controller 15 could implement the feature described in this invention.

The embodiment could detect color changes of dye liquor from time to time. By gathering data and adjusting the parameter on every actuator, the controller performs a close loop control to attain requested result. The aforesaid actuators include major valves controlling inlets and outlets.

Another alternative features for this invention include dye liquor dilution. In figure 10 there are in addition inlet valve 30 and outlet valve 31 connected to the controller 15, where the dye liquor amount and condition can be altered by controlling the aforesaid valves. In common rinsing practices the valves are opened simultaneously to fill and drain at a same flow rate, maintaining its volume while the dilution takes place. In this process the embodiment is operating to detect the color changes in real time. A target concentration can be set by default while the detection device renews the color data continuously. By computing the relation between the trend of changing data and flow rates, the valves are adjusted to achieve target concentration.

## Claims

1. A color detection device for dyeing machines, **characterized in that** it comprises a measurement chamber (2), a ray emitting device (7), a ray receiving device (8), a chamber inlet (3), a chamber outlet (4) and lenses (5A & 5B) on both ends of measurement chamber. The ray emitted from ray emitting device (7) pierces through the lens (5A), the liquor inside measurement chamber (2), the lens (5B) and to be received by ray receiving device (8).

2. A color detection device for fabric dyeing machines as described in claim 1, **characterized in that** the chamber outlet (4) is higher than chamber inlet (3) in altitude.

3. A color detection device for fabric dyeing machines as described in claim 1, **characterized in that** a chamber inlet valve (27) and chamber outlet valve (28) are respectively installed at said chamber inlet (3) and chamber outlet (4).

4. A color detection device for fabric dyeing machines as described in claim 1, **characterized in that** said lenses (5) are endurable for high temperature and pressure, whilst permeable by light rays.

5. A color detection device for fabric dyeing machines as described in claim 1, **characterized in that** the measurement chamber (2) further comprises a cleansing pipe (6), said cleansing pipe pierces through the top of measurement chamber and connects to an external source of cleansing agent while the other end splits into two branches pointing towards the lenses (5A & 5B).

6. A color detection device for fabric dyeing machines as described in claim 1 or claim 5, **characterized in that** the cleansing pipe (6) connects to a cleansing valve (28).

7. A color detection device for fabric dyeing machines as described in claim 1, **characterized in that** the lenses are separately bounded by a pair of inner flange (9) and outer flange (10). There are gaskets (11) in between the lens and flanges, and silicone rings (12) in between the outer flanges and ray emitting device (7) as well as ray receiving device (8).

8. A color detection device for fabric dyeing machines as described in claim 1, **characterized in that** the chamber inlet (3) has a filter (16) installed in front, said filter comprises a shell body (17), filter element (18), granules (19), filter inlet (20), filter outlet (21), backwash inlet (22) and backwash outlet (23).

9. A color detection device for fabric dyeing machines as described in claim 1, **characterized in that** it further comprises a controller (15), said controller connects to the ray receiving device (8) and controls the chamber inlet valve (27), chamber outlet valve (29) and cleansing valve (28).
